# EUROPEAN PATENT SPECIFICATION

(11) **EP 0 249 454 B1**
(45) Date of publication and mention of the grant of the patent: **20.01.1993**
(21) Application number: 87305122.1
(22) Date of filing: 10.06.1987
(51) Int. Cl.: G05D 7/01, F16K 21/16

(54) **Fluid flow control devices**
Einrichtung zur Steuerung des Durchsatzes einer Flüssigkeit
Dispositif de commande de débit de fluide

(30) Priority: 13.06.1986 US 873962
(43) Date of publication of application: 16.12.1987
(73) Proprietor: Dowty Decoto Inc., Yakima State of Washington WA 98909-0907 (US)
(72) Inventor: Gellerson, Walter G., Yakima Washington 98902 (US)
(74) Representative: Hogg, Jeffery Keith

(56) References cited:
- FR-A- 2 310 509
- US-A- 2 512 190
- US-A- 2 592 486
- US-A- 4 056 133

## Description

### Field of Invention

This invention relates to fluid flow control devices and more particularly to resettable fuses (or sensors) which monitor the quantity of fluid flowing through the fuse, and then blocks the flow when a pre-selected quantity of fluid has passed through. The invention is particularly suitable for use with hydraulic fluids.

Known control devices of this type have previously employed buoyant pistons or vane motors. Those employing buoyant pistons are commonly undesirably and inherently sensitive to changes in attitude of the fuse and also undesirably critical with respect to fit and clearances. A hydraulic fuse device is proposed in US 2592486 in which a proportion of the fluid flow is tapped to operate a primary piston which closes an outlet port to stop the fluid flow after a predetermined volume of fluid has flowed through the device. A second piston in the path of the fluid flow is responsive to said flow and controls movement of the primary piston so that it can only move to close the outlet port in response to said fluid flow. A hydraulic fluid flow control device is also proposed in US 4056133 which stops the fluid flow below a predetermined flow rate and comprises a poppet valve through which the fluid passes to an outlet port and which assumes a position below said predetermined flow rate which causes a metering valve to pass fluid to a primary piston to close the outlet port. The metering valve comprises a pin that cooperates with a central bore in the poppet valve. This device is used exclusively to prevent fluid flow below a predetermined flow rate. Fuses employing vane motors are undesirably expensive. The invention is concerned, therefore, with the provision of a fuse which, in general, is simple and effective in terms of construction, modes of operation and results and has few manufactured parts, relatively high force levels in sensing mechanism, and flow/volume characteristics which can be readily tailored, i.e. fitted, to many different design requirements.

### Disclosure of the Invention

In accordance with the invention, there is provided a fluid flow control device characterised in that it comprises:
a) a body defining a cavity,
b) a primary piston in the cavity and movable endwise to control fluid flow through a first port,
c) a sleeve, and a sleeve guide in the cavity and in the path of fluid flow toward the primary piston,
d) the sleeve and guide being axially movable relative to each other, and there being spring means acting to urge one of the sleeve and guide in one axial direction,
e) and control slots formed by the sleeve and sleeve guide to control flow both to the piston for controllably displacing the piston, and to the first port, wherein
   i) as the forward flow rate through the device reaches a threshold the piston begins said movement towards the first port, and
   ii) as the flow rate increases above the threshold, relative axial movement between the sleeve and guide acts:
      - to maintain substantially constant the fluid pressure drop across primary slot means included within the control slots; and
      - to meter fluid flow to the piston via metering slot means included within the control slots, for displacing the piston as aforesaid,
whereby the piston is displaced to close the first port after a required quantity of fluid has passed through the device.

The devices of the invention can usefully be referred to as fuses and typically can be reset by either flowing fluid through them in a reverse direction or by lowering the differential pressure across the fuse to a low limit. A threshold characteristic is provided which will not allow the fuse to close when the flow rate is less than a pre-set minimum.

The moving components, i.e. the piston and the sleeve, are preferably positioned about a single element, i.e. the sleeve guide, and the majority of the static components are preferably also located by the sleeve guide.

Preferably, the spring means urges the sleeve in a direction which reduces fluid flow through the primary slot means located in the sleeve and the sleeve guide.

Advantageously the sleeve guide is hollow to allow fluid to flow via the primary slot means from the sleeve exterior to the guide interior and then towards the first port.

The metering slot means can usefully communicate with an annular cavity within which the sleeve is axially movable. The control slots preferably include primary slot means extending radially through the sleeve to allow fluid to flow to the first port in full flow axial position of the sleeve. In addition, the control slots preferably also include threshold slot means associated with the primary slot means to initiate flow through the sleeve to the first port when the sleeve is substantially in a no flow position. The metering slot means can we axially spaced from the primary slot means to meter the flow to the piston.

The control slots advantageously include reset slot means at the end of the sleeve to allow escape of fluid from the piston under conditions of no fluid flow to the first port.

The sleeve preferably has axially opposed lost motion couplings to the spring means, whereby the sleeve may be oppositely displaced by fluid flow pressures in opposite directions corresponding to full forward flow through the device, and reverse flow through the device. Additionally, the sleeve can usefully have a reverse flow position in which the sleeve is displaced endwise relative to the guide by reverse flow pressure, the spring means acting yieldably to limit the extent of the endwise opposite sleeve displacement so that the reverse flow passes through the guide to exit the sleeve via the primary slot means included within the control slots.

In general, the combination of the sleeve, the sleeve guide and a sleeve spring are used to translate fluid flow through the fuse into a proportional, smaller flow that is used to detect the total volume of fluid that has passed through the fuse. In this regard, the sleeve has multiple primary flow slots, a small slot for setting the threshold, a metering slot, and reset slots for resetting the fuse. Fluid flow through the primary slots creates a nearly constant differential pressure across the fuse through the combination of the sleeve area and the sleeve spring force. The small threshold slot is used to set the upper and lower threshold limits; the metering slot meters flow into the piston cavity and thereby shuts off the flow through the fuse; and the reset slots allow fluid to escape from the piston cavity when the sleeve is in the no-flow position.

### Description of the Drawings

For a better understanding of the invention, reference is now made, by way of example only, to the accompanying drawings in which:
Figure 1 is an external, side elevation, showing an hydraulic fuse of the invention;
Figure 2 is an end view of the fuse shown in Figure 1 taken on the line 2-2 of Figure 1;
Figure 3 is a sectional view of the fuse shown in Figures 1 and 2 taken on line 3-3 of Figure 2; and
Figures 4-7 are fragmentary enlargements of the view shown in Figure 3 showing the fuse in zero flow condition (Figure 4); threshold flow condition (Figure 5); full flow condition (Figure 6); and reverse flow condition (Figure 7).

### Mode of Carrying Out the Invention

Referring to the drawings, the fuse 10 is adapted to monitor a quantity of hydraulic fluid passing through it, for example in direction of arrows 11 and 12, and then block such flow when a selected quantity of fluid has passed through it.

The fuse includes body 13 defining a cavity 14. The body comprises a forward cylinder 13a, a rearward plug 13b, and an assembly 13d. The cylinder has an enlarged rearward section 15 telescopically receiving the plug 13b, with threads interconnecting these elements at 16 and sealed by an O-ring seal 17.

A sleeve guide 18 extends in the body cylinder, i.e. within the cavity 14, and has a flange 18a that fits the bore 15a of section 13c. It is held in an axial position, against an internal tapered shoulder 19 of cylinder 13a by the forward end 20 of the plug 13b. An O-ring seal 21 seals the flange outer surface and the bore 15a.

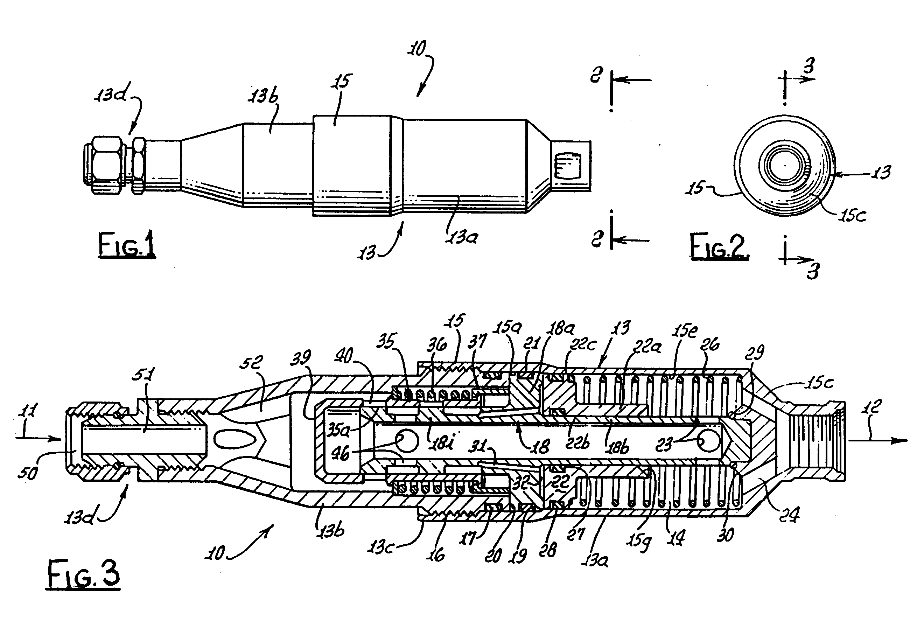

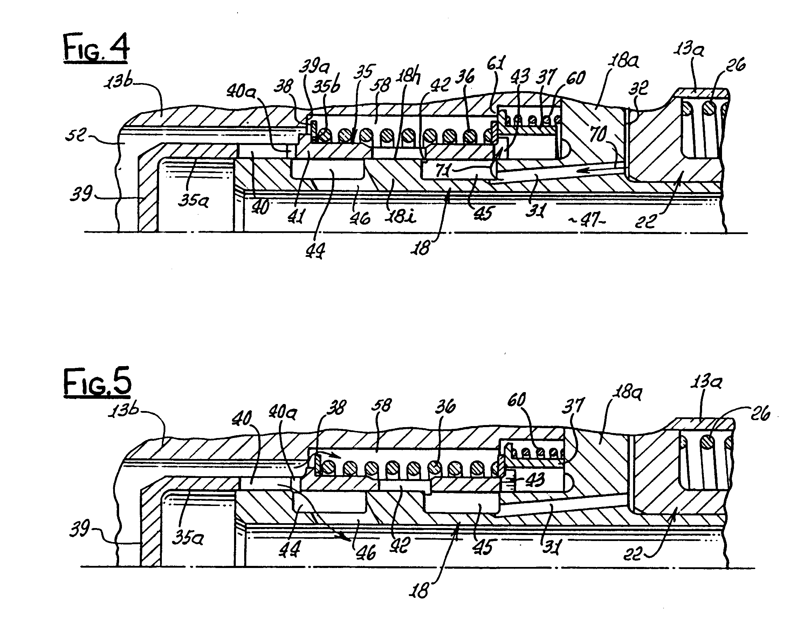

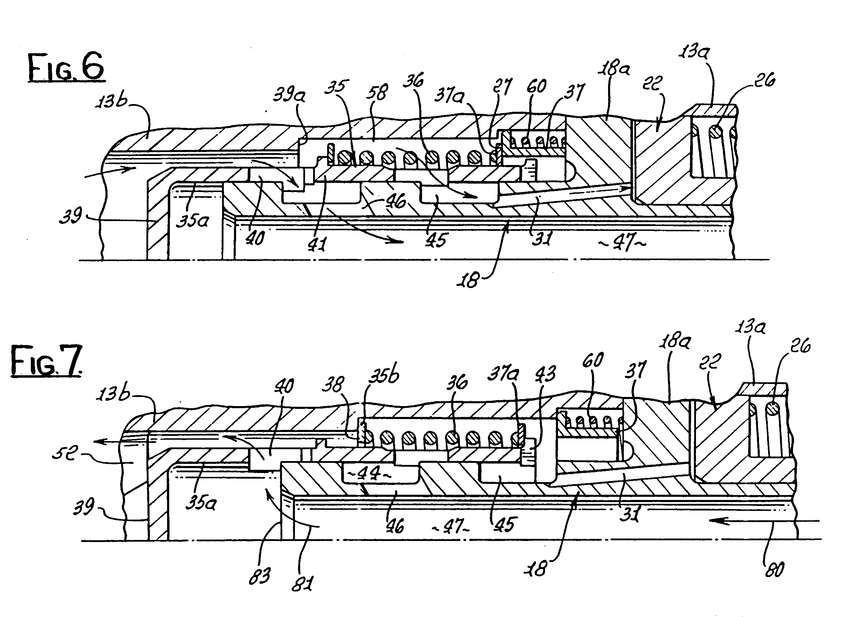

A primary piston 22 is located in the cavity (within the cylinder), to move endwise for controlling fluid flow through first and second ports 23 and 24. As shown, the piston 22 is annular and is slidable along the tubular stem 18b of the guide 18. As the piston moves to the right (as shown, for example, in Figure 3), its tubular stem 22a closes four ports 23 in stem 18b, to block forward flow of fluid via these ports and hence to exit points 24 in the tapered end piece 15c of the cylinder 13a. A compression spring 26 in the cavity 14 yieldably resists forward movement of the piston. Seals 27 and 28 respectively act between the piston bore 22b and the guide stem 18b, and between the piston outer surface 22c and the bore 15e of the cylinder section 13a. The tapered end 15g of the piston stem first seats against an O-ring seal 29 and then against a taper 30 of the cylinder at an extreme rightward position of the piston. Hydraulic fluid pressure to displace the piston to the right (as shown in Figure 3) passes via slot means (to be described) and ports 31 in the guide 18 to the chamber 32 adjacent the left end face of the piston.

Also provided in the body cavity is a tubular control sleeve 35, which is axially movable along and upon the guide 18. The sleeve has a bore 35a slidably closely fitting on the outer cylindrical surface 18h of the guide stem 18i, projecting to the left (as shown) from flanged portion 18a of the guide. The sleeve 35 and guide 18 are in the path of fluid flow toward the primary piston, and they are axially movable relative to each other. A compression spring 36 acts to urge the sleeve in an axial direction, i.e. to the left, in the example. The spring is in a permanent state of compression between a tubular seat 37, and an annular retainer 38. The latter initially engages a plug shoulder 39a to limit spring extension, but when sufficient force build-up occurs, the retainer 38 is displaced to the right (as shown) by the sleeve shoulder 35b. The sleeve includes a cap 39 that fits over the left end of the guide 18, and forms therewith a primary flow slot 40.

Extending the description to Figures 4 to 7, flow control slots are formed by the relatively movable sleeve and guide to control flow both to the piston and to the first port 23, and also port 24. These slots include the primary flow slot or slots 40, a small threshold slot 40a at the forward end of slots 40 (these slots extending radially through the sleeve wall 41); a metering slot 42 through wall 41, spaced forwardly of slot 40a; and a reset slot or slots 43 through wall 41, at the forward end of the sleeve. In addition, there are recesses or grooves 44 and 45 sunk in the wall of stem 18i, the recess 44 opening at 46 to the interior 47 of the guide in communication with port 23. Four primary slots 40 are provided about the sleeve axis.

In operation of the fuse, fluid entering ports 50 and 51 in fittings 13d passes to the interior 52 of the plug, externally of the cap 39. Under essentially zero condition, as represented in Figure 4, no fluid flows to the ports 23 and 24 via the primary slot 40 since the sleeve is positioned as shown, whereby the slot 40 is blanked by the exterior surface 56 of the guide. The threshold slot 40a sets upper and lower threshold flow limits, such that when fluid pressure in 52 reaches an upper limit, the sleeve moves slightly to the right to a threshold flow condition, as seen in Figure 5, so that fluid now flows through slot 40 to port 23, via 46 and 47, and fluid also flows past the retainer 38 into cavity or space 58 exposed to metering slot 42. Thus, fluid flow is metered via slot 42 to groove 45 and via passage 31 to the piston, initiating its movement to the right (as shown). Such flows to 47 and to the piston are increased under full flow condition as represented in Figure 6; and when the predetermined quantity of fluid has passed through the fuse, (determined by the amount of metered fluid needed to drive piston 22 fully to the right), the outlet ports 23 and 24 are closed. Fluid flow through the primary slots creates a nearly constant differential pressure across the fuse through the combination of the sleeve area and the sleeve spring force.

Since the pressure drop across the sleeve will never exceed 345 kN/m² (50 lb/in²), for example, even at extreme flow rate, the diametral clearance between the sleeve and sleeve guide can be quite large, say from 0.0025 to 0.0125mm (0.0001 to 0.0005 inches) which allows the components to be interchangeable with no matched sets.

Under zero conditions as shown in Figure 4, the reset slots 43 allow fluid to escape from the piston chamber (at the left of the piston face) as indicated by arrows 70 and 71. At that time, spring 26 urges the piston to the left.

The fuse construction also allows for reverse flow, as represented by arrows 80 and 81 in Figure 7. Under such conditions, the fluid pressure acting against the cap 39 displaces the sleeve to the left (as shown) so that fluid by-passes grooves 44 and 45, exits the left end 83 of the guide 18, and escapes the sleeve via slots 40. The spring 36 yieldably resists displacement to the left of the sleeve by virtue of the seating of the retainer 38 at 35b, and leftward compression of the spring by the retainer 37a. In Figure 6, the retainer 37a seats at 27, and allows the sleeve to move to the right relative thereto. Such yieldably resisted movements of the sleeve are facilitated by "lost motion" couplings to the spring 36 as described. A spring 60 urges seat 37 leftwardly against body cylinder shoulder 61, in Figure 4.

## Claims

1. A fluid flow control device comprising:
a) a body (13) defining a cavity (14),
b) a primary piston (22) in the cavity (14) and movable endwise to control fluid flow through a first port (23),
characterised in that it further comprises:
c) a sleeve (35), and a sleeve guide (18) in the cavity (14) and in the path of fluid flow toward the primary piston (22),
d) the sleeve (35) and guide (18) being axially movable relative to each other, and there being spring means (36) acting to urge one of the sleeve (35) and guide (18) in one axial direction,
e) and control slots (40, 42, 44, 45) formed by the sleeve (35) and sleeve guide (18) to control flow both to the piston (22) for controllably displacing the piston, and to the first port (23), wherein
i) as the forward flow rate through the device reaches a threshold the piston (22) begins said movement towards the first port (23), and
ii) as the flow rate increases above the threshold, relative axial movement between the sleeve (35) and guide (18) acts:
- to maintain substantially constant the fluid pressure drop across primary slot means (40, 44) included within the control slots; and
- to meter fluid flow to the piston (22) via metering slot means (42, 45) included within the control slots, for displacing the piston (22) as aforesaid,
whereby the piston (22) is displaced to close the first port (23) after a required quantity of fluid has passed through the device.

2. A device according to claim 1 in which the piston (22) and the sleeve (35) are positioned about a single element (18).

3. A device according to claim 1 or claim 2 in which the spring means (36) urges the sleeve (35) in a direction which reduces fluid flow through the primary slot means (40, 44) located in the sleeve (35) and the sleeve guide (18).

4. A device according to any preceding claim in which the sleeve guide (18) is hollow to allow fluid to flow via the primary slot means (40, 44) from the sleeve exterior to the guide interior and then towards the first port (23).

5. A device according to any preceding claim in which the metering slot means (42, 45) communicate with an annular cavity (58) within which the sleeve (35) is axially movable.

6. A device according to any preceding claim in which the control slots include primary slot means (40) extending radially through the sleeve (35) to allow fluid to flow to the first port (23) in full flow axial position of the sleeve (35).

7. A device according to any preceding claim in which the control slots also include threshold slot means (40a) associated with the primary slot means (40) to initiate flow through the sleeve (35) to the first port (23) when the sleeve (35) is substantially in a no flow position.

8. A device according to any preceding claim in which the control slots include metering slot means (44) axially spaced from the primary slot means to meter the flow to the piston.

9. A device according to any preceding claim in which the control slots include reset slot means (43) at the end of the sleeve (35) to allow escape of fluid from the piston (22) under conditions of no fluid flow to the first port (23).

10. A device according to any preceding claim in which the sleeve (35) has axially opposed lost motion couplings (38, 37a) to the spring means (36), whereby the sleeve (35) may be oppositely displaced by fluid flow pressures in opposite directions corresponding to full forward flow through the device, and reverse flow through the device.

11. A device according to any preceding claim in which the sleeve (35) has a reverse flow position in which the sleeve (35) is displaced endwise relative to the guide (18) by reverse flow pressure, the spring means (36) acting yieldably to limit the extent of the endwise opposite sleeve displacement so that the reverse flow passes through the guide (18) to exit the sleeve (35) via the primary slot means (40, 44) included within the control slots.

## Patentansprüche

1. Durchfluß-Steuervorrichtung enthaltend:
a. Einen Körper (13) bzw. ein Gehäuse, der/das einen Zylinderraum (14) bildet,
b. einen in dem Zylinderraum (14) hin- und her beweglichen ersten Kolben (22) zur Steuerung des Durchflusses durch einen ersten Durchlaß (23),
gekennzeichnet durch folgende weitere Bestandteile:
c. eine Hülse (35) und eine Hülsenführung (18) in dem Zylinderraum (14) und in dem Strömungspfad zu dem ersten Kolben (22),
d. die Hülse (35) und Führung (18) sind achsial gegeneinander beweglich, und es sind Feder-Mittel (36) vorgesehen, welche die Hülse (35) und/oder Führung (18) in eine achsiale Richtung drängen,
e. und Steuerschlitze (40, 42, 44, 55), gebildet durch die Hülse (35) und Hülsenführung (18) zur Steuerung der Strömung zu dem Kolben (22) zur gesteuerten Verschiebung des Kolbens und zu dem ersten Auslaß (23), wobei
i) wenn die Durchflußrate in Vorwärtsrichtung durch die Vorrichtung einen Schwellenwert erreicht, der Kolben (22) die besagte Bewegung in Richtung zu dem ersten Durchlaß (23) beginnt und
ii) wenn die Strömungsrate über den Schwellenwert steigt, bewirkt eine achsiale Relativbewegung zwischen Hülse (35) und Führung (18):
- Konstanthaltung des Druckabfalls an den primären Steuerschlitzen (40, 44) innerhalb der Steuerschlitze; und
- Abmessung des Durchflusses zu dem Kolben (22) über zumessende Steuerschlitze (42, 45) innerhalb der Steuerschlitze zur Verschiebung des Kolbens (42), wie vorerwähnt,
wobei der Kolben (22) verschoben wird zum Verschließen des ersten Durchlasses (23) nach Durchfluß einer geforderten Menge des Fluids durch die Vorrichtung.

2. Vorrichtung nach Anspruch 1, wobei der Kolben (22) und die Hülse (35) auf einem einzigen Element (18) angeordnet sind.

3. Vorrichtung nach Anspruch 1 oder 2, in welcher die Federmittel (36) die Hülse in eine Richtung drängen, in der der Durchfluß durch die ersten Schlitzmittel (40, 44), die sich in der Hülse (35) und der Hülsenführung (18) befinden, reduziert wird.

4. Vorrichtung nach einem der vorhergehenden Ansprüche, wobei die Hülsenführung (18) hohl ist, zwecks Durchflusses über die ersten Steuerschlitze (40, 44) vom Außenraum der Hülse zum Innenraum der Führung und dann in Richtung zu dem ersten Durchlaß (23).

5. Vorrichtung nach einem der vorhergehenden Ansprüche, wobei die zumessenden bzw. dosierenden Schlitze (42, 45) in Verbindung stehen mit einem Ringraum (58), in welchem die Hülse (35) achsial beweglich ist.

6. Vorrichtung nach einem der vorhergehenden Ansprüche, wobei die Steuerschlitze erste Schlitzmittel (40) einschließen, die sich radial durch die Hülse (35) erstrecken, zwecks Durchfluß zu dem ersten Auslaß (23) in der vollen Durchflußstellung der Hülse (35).

7. Vorrichtung nach einem der vorhergehenden Ansprüche, wobei die Steuerschlitze auch Schwellenschlitzmittel (40a) aufweisen, die mit dem primären Schlitz (40) zusammenwirken, um einen Durchfluß durch die Hülse (35) zu dem ersten Durchlaß (23) zu initiieren, wenn die Hülse (35) sich im wesentlichen in einer 0-Stellung befindet.

8. Vorrichtung nach einem der vorhergehenden Ansprüche, wobei die Steuerschlitze Zumeßschlitze (44) beinhalten, die achsial beabstandet sind von den ersten Schlitzmitteln, zum Zumessen des Durchflusses zu dem Kolben.

9. Vorrichtung nach einem der vorhergehenden Ansprüche, wobei die Steuerschlitze Rückstellschlitzmittel (43) am Ende der Hülse (35) aufweisen, um ein Entweichen von Fluid von dem Kolben (22) bei Sperrung des ersten Durchlasses (23) zu gestatten.

10. Vorrichtung nach einem der vorhergehenden Ansprüche, wobei die Hülse (35) achsial gegenüberliegende Leerlaufkupplungen (38, 37a) zu den Federmitteln (36) hat, wodurch die Hülse (35) entgegengesetzt verschoben werden kann durch den Flüssigkeitsdruck in entgegengesetzter Richtung entsprechend dem vollen Vorwärtsdurchfluß durch die Vorrichtung und Rückwärtsfluß durch die Vorrichtung.

11. Vorrichtung nach einem der vorhergehenden Ansprüche, wobei die Hülse (35) eine Strömungsumkehrposition hat, in welcher die Hülse (35) gegenüber der Führung (18) in Längsrichtung durch umgekehrten Strömungsdruck verschoben wird, wobei die Federmittel (36) nachgiebig wirken, um das Ausmaß der entgegengesetzten Längsbewegung der Hülse zu begrenzen, so daß der umgekehrte Durchfluß durch die Führung (18) die Hülse (35) durch die ersten Schlitzmittel (40, 44) innerhalb der Steuerschlitze verläßt.

## Revendications

1. Dispositif de commande de débit de fluide comprenant :
a) un corps (13) déterminant une cavité (14),
b) un piston primaire (22) disposé à l'intérieur de la cavité (14) et pouvant se déplacer longitudinalement pour commander l'écoulement de fluide par un premier orifice (23),
caractérisé en ce qu'il comprend de plus :
c) un manchon (35) et un guide de manchon (18) qui se trouvent dans la cavité (14) et sur le chemin d'écoulement de fluide vers le piston primaire (22),
d) le manchon (35) et le guide (18) pouvant se déplacer axialement l'un par rapport à l'autre, et des moyens à ressort (36) étant prévus pour contraindre le manchon (35) ou le guide (18) dans une direction axiale,
e) et des fentes de commande (40, 42, 44, 45) formées par le manchon (35) et par le guide de manchon (18) pour commander l'écoulement vers le piston (22) afin de déplacer ce piston de façon controlable, et vers le premier orifice (23), de manière que :
i) lorsque le débit à travers le dispositif atteint un seuil, le piston (22) commence son dit mouvement en direction du premier orifice (23), et
ii) lorsque le débit augmente en étant supérieur au seuil, un déplacement axial relatif entre le manchon(35) et le guide (18) agit :
- pour maintenir à une valeur sensiblement constante la chute de pression de fluide à travers un premier moyen à fente primaire (40, 44) compris dans les fentes de commande ; et
- pour mesurer l'écoulement de fluide vers le piston (22) par l'intermédiaire d'un moyen de mesure à fente (42, 45) compris dans les fentes de commande, de façon à déplacer le piston (22) comme mentionné plus haut,
de manière que le piston (22) soit déplacé pour fermer le premier orifice (23) après qu'une quantité requise de fluide ait traversé le dispositif.

2. Dispositif selon la revendication 1, dans lequel le piston (22) et le manchon (35) sont disposés autour d'un seul élément (18).

3. Dispositif selon la revendication 1 ou la revendication 2, dans lequel le moyen à ressort (36) contraint le manchon (35) dans une direction qui réduit l'écoulement de fluide à travers le moyen à fente primaire (40, 44) logé dans le manchon (35) et le guide de manchon (18).

4. Dispositif selon l'une quelconque des revendications précédentes, dans lequel le guide de manchon (18) est creux pour permettre au fluide de s'écouler, en passant par le moyen à fente primaire (40, 44), depuis l'extérieur du manchon jusqu'à l'intérieur du guide, puis vers le premier orifice (23).

5. Dispositif selon l'une quelconque des revendications précédentes, dans lequel le moyen de mesure à fente (42, 45) communique avec une cavité annulaire (58) à l'intérieur de laquelle le manchon (35) peut se déplacer axialement.

6. Dispositif selon l'une quelconque des revendications précédentes, dans lequel les fentes de commande comprennent un moyen à fente primaire (40) qui s'étend radialement à travers le manchon (35) pour permettre au fluide, dans la position axiale d'écoulement total du manchon (35), de s'écouler jusqu'au premier orifice (23).

7. Dispositif selon l'une quelconque des revendications précédentes, dans lequel les fentes de commande comprennent aussi des moyens de seuil à fente (40a) associés au moyen à fente primaire (40) pour initier l'écoulement à travers le manchon (35), jusqu'au premier orifice (23), lorsque le manchon (35) est sensiblement dans une position de non écoulement.

8. Dispositif selon l'une quelconque des revendications précédentes, dans lequel les fentes de commande comprennent un moyen de mesure à fente (44), écarté axialement du moyen à fente primaire, pour mesurer l'écoulement en direction du piston.

9. Dispositif selon l'une quelconque des revendications précédentes, dans lequel les fentes de commande comprennent des moyens de replacement à fente (43) disposés à l'extrémité du manchon (35) pour permettre, dans des conditions d'absence d'écoulement de fluide, l'échappement du fluide depuis le piston (22) vers le premier orifice (23).

10. Dispositif selon l'une quelconque des revendications précédentes, dans lequel le manchon (35) présente des accouplements (38, 37a) aux moyens à ressort (36), opposés axialement, de sorte que le manchon (35) peut être déplacé par les pressions d'écoulement de fluide dans des directions opposées qui correspondent à un écoulement total vers l'avant à travers le dispositif, et à un écoulement inversé à travers le dispositif.

11. Dispositif selon l'une quelconque des revendications précédentes, dans lequel le manchon (35) prend une position d'écoulement inversée dans laquelle il se déplace longitudinalement par rapport au guide (18) sous l'effet de la pression de l'écoulement inversé, le moyen à ressort (36) agissant puissamment pour limiter l'étendue du déplacement longitudinal opposé au manchon de façon que l'écoulement inversé traverse le guide (18), pour quitter le manchon (35) en passant par le moyen à fente primaire (40, 44) contenu dans les fentes de commande.
